# EUROPÄISCHE PATENTSCHRIFT

(11) **EP 2 430 335 B1**
(45) Veröffentlichungstag und Bekanntmachung des Hinweises auf die Patenterteilung: **27.11.2013**
(21) Anmeldenummer: 10702692.4
(22) Anmeldetag: 08.02.2010
(51) Int. Cl.: F16J 15/08, F16J 15/12

(54) **MEHRLAGEN-DICHTRING**
MULTI-LAYERED SEALING RING
JOINT MULTI-COUCHES

(30) Priorität: 15.05.2009 DE 102009021504
(43) Veröffentlichungstag der Anmeldung: 21.03.2012
(73) Patentinhaber: Federal-Mogul Sealing Systems Gmbh, 57562 Herdorf (DE)
(72) Erfinder: SCHMITT, Klaus, 57520 Grünebach (DE)
(74) Vertreter: Becker Kurig Straus
(86) Internationale Anmeldenummer: PCT/EP2010/051465
(87) Internationale Veröffentlichungsnummer: WO 2010/130472

(56) Entgegenhaltungen:
- WO-A1-00/57089
- DE-C- 495 493
- GB-A- 856 977
- US-A- 3 217 922
- US-A- 5 433 370
- US-A1- 2002 153 673

## Beschreibung

Die vorliegende Erfindung betrifft einen V-Dichtring, insbesondere für Turbolader und Abgasanlagen von Verbrennungsmotoren, mit mehr als einer Lage.

Derzeit werden V-Abdichtringe herkömmlicherweise aus einem einwandigen Ring hergestellt. Solche Ringe mit V-förmigen Querschnitt werden für gewöhnlich als Dichtungen an Turboladern und Abgasanlagen eingesetzt. Es gibt derartige Ringe ohne Schweißnaht, aber die Ringe sind meistens geschweißt. Sie bestehen herkömmlicherweise aus einem vergleichsweise harten Material.

Die Abdichtringe werden sowohl mit der offenen Seite der V-Form nach innen als auch nach außen geformt. Unterschiedliche Materialien wie beispielsweise Inconell, 1.4828 etc. kommen zum Einsatz.

Ein herkömmlicher Dichtring ist bekannt aus z.B. GB 856,977.

Im Bereich der Abdichtzone kann es bedingt durch die Schweißnaht oder auch durch ein aufgrund des harten Materials nicht ausreichenden Anpassungsverhaltens an die abzudichtenden Bauteil zu Leckagen kommen. Bekannte einwandige Dichtringe aus einem hochwertigen Material herzustellen erfordert einen großen Materialeinsatz.

Es ist daher eine Aufgabe der Erfindung, einen Abdichtring bereitzustellen, der verbesserte Dichteigenschaften aufweist, einen höhere Qualität besitzt und der unter einem verminderten Einsatz hochwertiger Materialien hergestellt werden kann.

Gemäß einem Aspekt der Erfindung wird ein Dichtring bereitgestellt, insbesondere für Bauteile einer Verbrennungskraftmaschine, gemäß Anspruch 1.

Zwei oder mehr Ringe werden bei dem Dichtring gemäß der Erfindung ineinander verschachtelt. Durch die Verwendung mehrerer Ringe wird ein Labyrinth-Effekt erzielt, der die Abdichtgüte erhöht. Die Ringe liegen aneinander an, wobei die offene Seite der V-Form jeweils entweder nach innen oder nach außen weist.

Gemäß einer Ausführungsform umfasst der Dichtring weiter
- einen oder mehrere geschlossene Zwischen-Ringe mit V-förmigem Querschnitt, angeordnet zwischen dem inneren Ring und dem äußeren Ring, wobei die offene Seite in die gleiche Richtung wie die des inneren und äußeren Rings weist.

Zur Verbesserung der Dichteigenschaften können mehr als zwei Ringe verwendet werden.

Gemäß einer Ausführungsform besteht der äußere Ring aus einem weicheren Material als das des inneren Rings.

Durch Verwendung eines weicheren Materials für den äußeren Ring kann das Anpassungsverhalten und somit die Abdichtgüte verbessert werden. Der innere Ring sorgt für die erforderliche Stabilität, während der äußere Ring eine bessere Anpassung gewährleistet.

Gemäß der Erfindung bestehen der äußere Ring aus einem nicht wärmehärtbaren Material und der innere Ring aus einem wärmehärtbaren Material.

Durch diese Materialkombination kann der Dichtring nach der Ausbildung der V-Form einer Wärmebehandlung unterzogen werden, wodurch der innere Ring aushärtet, während der äußere Ring weich wird.

Gemäß der Erfindung ist der Dichtring in mindestens einer der Abdichtzonen profiliert und in mindestens einer der Abdichtzonen beschichtet.

Durch die zusätzliche Profilierung und Beschichtung kann die Abdichtung verbessert werden. Es wird bevorzugt der äußere Ring profiliert und/oder beschichtet, grundsätzlich kann aber jeder der V-Ringe eine Profilierung und/oder Beschichtung aufweisen.

Gemäß einer Ausführungsform unterscheidet sich mindestens ein V-fönniger Ring in der Materialstärke und/oder dem Material von mindestens einem der anderen V-förmigen Ringe.

Durch die Wahl der Materialart und/oder -Stärke können die Eigenschaften des erfindungsgemäßen Dichtrings entsprechend eingestellt werden. Der entstehende Spalt an der Peripherie zwischen jeweils zwei V-Ringen kann durch die Wahl der Dicke bzw. Stärke der einzelnen Ringe vergrößert oder verkleinert werden. Ebenso kann durch die Wahl der Dicke die Elastizität der jeweiligen V-Ringe gesteuert werden.

Die Materialwahl ermöglicht unter anderem die Einstellung des Anpassungsverhaltens (härter/weicher). Durch die Verwendung mehrerer V-Ringe kann hochwertiges und teures Material gezielter und in geringerem Maß nur dort (beispielsweise beim äußeren Ring) eingesetzt werden, wo es erforderlich ist, während ein Teil der verwendeten V-Ringe (beispielsweise der innere Ring oder die Zwischenringe) aus günstigeren Materialien gefertigt werden kann, ohne dass dabei die Qualität des erfindungsgemäßen Dichtrings beeinträchtigt wird.

### Kurze Beschreibung der Zeichnung

Im Folgenden wird die Erfindung weiter erläutert unter Bezugnahme auf die Zeichnung, die beispielhafte Ausführungsformen darstellt, und in der
- Fig. 1: eine erste Ausführungsform eines Dichtrings im Querschnitt zeigt;
- Fig. 2: eine zweite Ausführungsform eines Dichtrings im Querschnitt zeigt;
- Fig. 3: eine dritte Ausführungsform eines beschichteten Dichtrings gemäß der Erfindung im Querschnitt zeigt; Die erfindungsgemäße Profilierung wird hier nicht gezeigt;
- Fig. 4: eine vierte Ausführungsform eines profilierten Dichtrings gemäß der Erfindung im Querschnitt zeigt; Die erfindungsgemäße Beschichtung wird hier nicht gezeigt;
- Fig. 5: eine dreidimensionale Ansicht eines Sektorausschnitts eines Dichtrings im Querschnitt zeigt; und
- Fig. 6: einen vollständigen Querschnitt einer Ausführungsform zeigt.

### Detaillierte Beschreibung der Erfindung

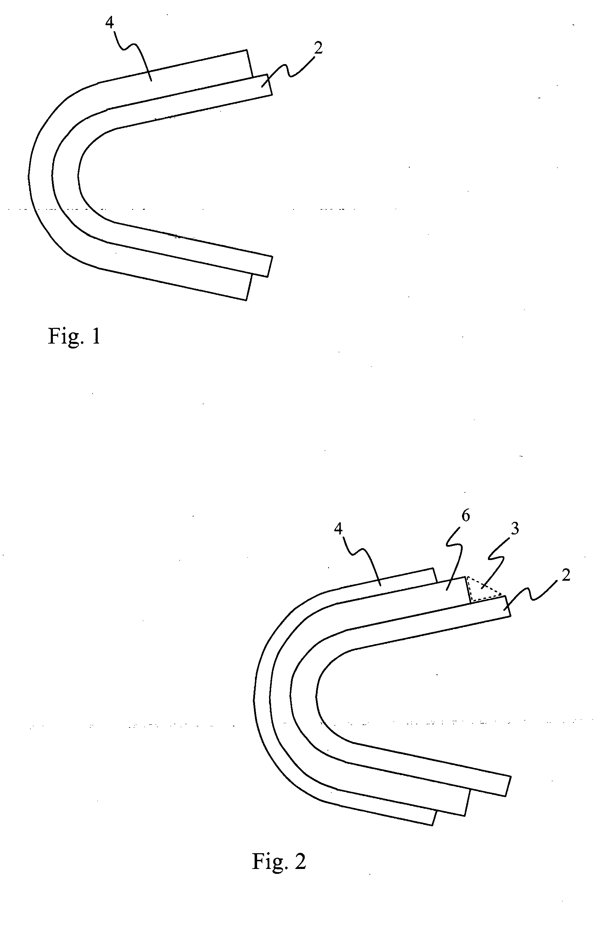

In Fig. 1 ist eine erste Ausführungsform eines Dichtrings gezeigt. Der Dichtring umfasst einen inneren Ring 2 mit V-förmigem Querschnitt, sowie einen äußeren Ring 4 mit ebenfalls V-förmigem Querschnitt.

Der innere Ring 2 und der äußere Ring 4 liegen aneinander an. Dadurch wird eine verbesserte Dichtwirkung durch Ausbildung eines Labyrinth-Effekts erzielt. Die offene Seite kann, wie hier gezeigt, nach innen weisen. Mit anderen Worten, die geschlossene Seite des äußeren Rings 4 ist auf der Außenseite des gesamten Dichtrings gelegen, während die offene Seite der inneren Rings 2 auf der Innenseite des gesamten Dichtrings gelegen ist.

In alternativen Ausführungsformen kann dies aber auch umgekehrt sein. In solchen Ausführungsformen weist die offene Seite der V-Ringe nach außen, d.h. die geschlossene Seite des äußeren Rings ist auf der Außenseite des gesamten Dichtrings gelegen, während die geschlossene Seite der inneren Rings auf der Innenseite des gesamten Dichtrings gelegen ist.

In Fig. 2 ist eine alternative Ausführungsform gezeigt. Dieser Dichtring umfasst einen inneren Ring 2, einen äußeren Ring 4 und zusätzlich einen Zwischenring 6. Alle Ringe weisen eine V-Form auf und weisen mit der offenen Seite in die gleiche Richtung. Auch in dieser Figur ist beispielhaft die Variante mit nach innen offenen V-Ringen gezeigt, wobei die Ausführungsform sich auch auf die umgekehrte Ausführungsform erstreckt.

Die Verwendung von mehr als zwei Ringen bietet eine flexiblere Möglichkeit, Materialart- und -Stärke der Ringe anzupassen, um das gewünschte Anpassungs- und Abdichtverhalten zu erzielen. Die Materialdicke beeinflusst auch den Spalt 3 (hier gestrichelt angedeutet), der zwischen zwei Ringen gebildet wird. Je dünner die beteiligten Ringe sind, desto kleiner ist der Spalt 3. Über die Wahl des Materials kann die Elastizität des entsprechenden Ringes eingestellt werden.

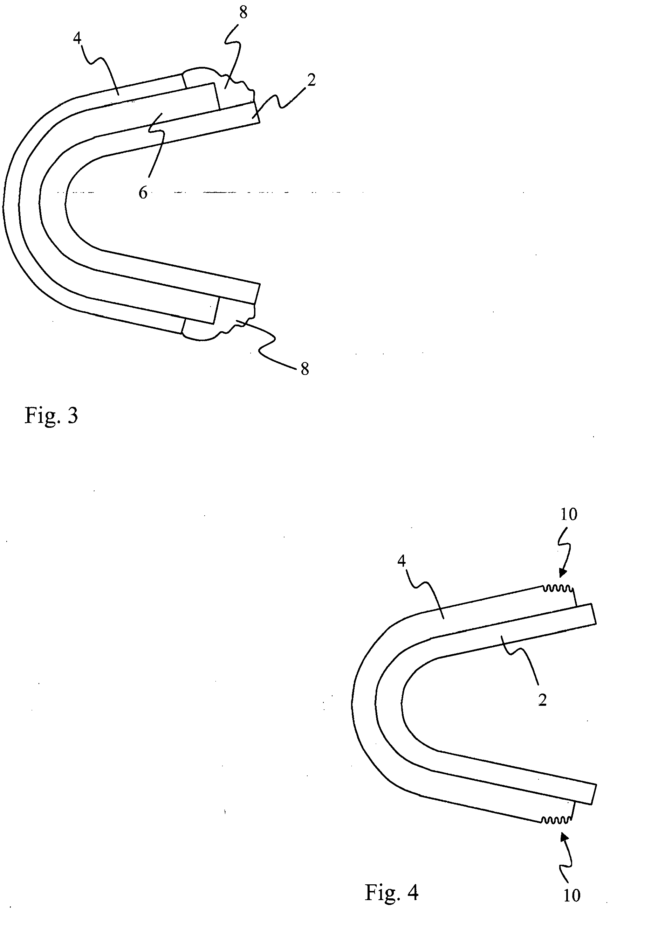

In Fig. 3 ist eine Ausführungsform der Erfindung gezeigt, wobei aber die erfindungsgemäße Profilierung nicht gezeigt wird. Diese Ausführungsform baut auf der in Fig. 2 gezeigten Variante mit einem inneren Ring 2, einem äußeren Ring 4 und einem Zwischenring 6 auf. Zusätzlich ist hier eine Beschichtung 8 vorgesehen, um die Abdichtung in den axialen Abdichtzonen zu verbessern.

In Fig. 4 ist eine weitere Ausführungsform des erfindungsgemäßen Dichtrings gezeigt, wobei aber die erfindungsgemäße Beschichtung nicht gezeigt wird. Diese Ausführungsform stellt eine Erweiterung der in Fig. 1 gezeigten Variante dar. Dieser Dichtring umfasst ebenfalls einen inneren Ring 2 und einen äußeren Ring 4. Beide Ringe weisen eine V-Form auf und weisen mit der offenen Seite in die gleiche Richtung (hier nach innen, in alternativen Ausführungsformen aber auch nach außen).

Um die Abdichtung in den axialen Abdichtzonen zu verbessern, weist dieser Dichtring eine Profilierung 10 auf.

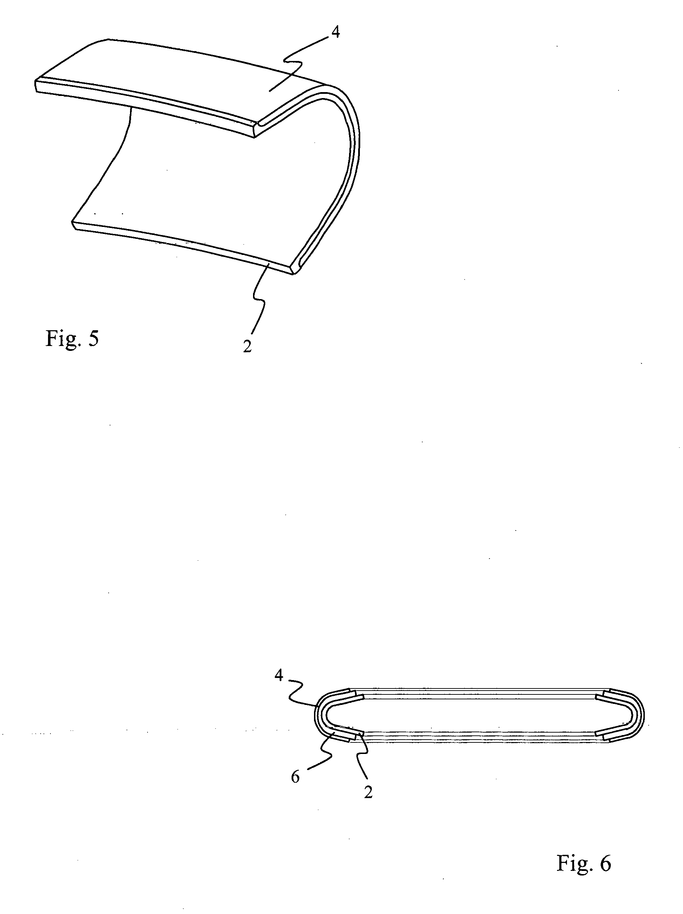

In Fig. 5 ist eine dreidimensionale Ansicht eines Teilsektors eines Dichtrings gezeigt. Der Dichtring weist einen inneren V-förmigen Ring 2 und einen äußeren V-förmigen Ring 4 auf. Der Übergangsbereich zwischen Ring 2 und Ring 4 ist hier nicht wie bei den bisher beschriebenen Ausführungsformen stufenförmig. Stattdessen erstreckt sich der innere Ring 2 auch in den bei den bisher beschriebenen Ausführungsformen vorhandenen Spalt hinein, so dass sich insgesamt ein spaltloser Übergang ergibt.

In Fig. 6 ist ein Gesamtquerschnitt durch einen Dichtring gezeigt, der dem aus Fig. 2 entspricht.

Erfindungsgemäß werden die Ausführungsformen von Fig. 3 und 4 kombiniert, d.h. es werden sowohl eine Profilierung als auch eine Beschichtung in der (oder einer der oder auch mehreren) Abdichtzonen vorgesehen. Die Profilierung kann auf demselben bzw. denselben Ring(en) angeordnet sein wie die Beschichtung. So könnte beispielsweise ein Dichtring ähnlich dem von Fig. 3 zusätzlich mit einer Profilierung des Zwischenrings versehen sein.

In anderen Ausführungsformen ist ein Ring (oder sind mehrere Ringe) beschichtet und ein anderer profiliert (oder mehrere). Beispielsweise kann in einer auf Fig. 3 aufbauenden Ausführungsform sich die Beschichtung nur auf den inneren und den Zwischenring erstrecken, während der äußere Ring nicht beschichtet, aber profiliert ist.

Verschiedene Anzahlen der Ringe (zwei, drei oder mehr), optionale Beschichtung und optionale Profilierung können beliebig miteinander kombiniert werden. Die zwei axialen Abdichtzonen müssen nicht notwendigerweise gleich ausgeführt sein. So kann beispielsweise eine erste Abdichtzone nur beschichtet sein, während die zweite Abdichtzone nur profiliert ist. Auch kann nur eine Abdichtzone beschichtet und/oder profiliert sein.

Die Erfindung erstreckt sich auch auf Ausführungsformen mit mehr als drei Ringen, wobei in diesem Fall die Anzahl der Zwischenringe größer eins ist. Der Dichtring der Erfindung kann sowohl nach innen als auch nach außen hin offen geformt sein, wobei in der vorstehenden Beschreibung in beispielhafter Weise nur die nach innen offene Variante beschrieben wurde.

## Patentansprüche

1. Dichtring, insbesondere für Bauteile einer Verbrennungskraftmaschine, mit einer ersten und einer zweiten axialen Abdichtzone, umfassend
- einen inneren geschlossenen Ring (2) mit V-förmigem Querschnitt; und
- einen äußeren geschlossenen Ring (4) mit V-förmigem Querschnitt, dessen offene Seite in die gleiche Richtung wie die des inneren Rings (2) weist; **dadurch gekennzeichnet, dass**
- der äußere Ring (4) aus einem nicht wärmehärtbaren Material und der innere Ring (2) aus einem wärmehärtbaren Material besteht; und dass
- mindestens der innere Ring (2) oder der äußere Ring (4) in mindestens einer der Abdichtzonen eine Profilierung (10) aufweist, und dass der innere Ring (2) oder der äußere Ring (4) in mindestens einer der axialen Abdichtzonen eine Beschichtung (8) aufweist.

2. Dichtring nach Anspruch 1, weiter umfassend
- einen oder mehrere geschlossene Zwischen-Ringe (6) mit V-förmigem Querschnitt, angeordnet zwischen dem inneren Ring (2) und dem äußeren Ring (4), wobei die offene Seite in die gleiche Richtung wie die des inneren (2) und äußeren Rings (4) weist.

3. Dichtring nach Anspruch 1 oder 2, wobei der äußere Ring (4) aus einem weicheren Material als dem des inneren Rings (2) besteht.

4. Dichtring nach einem der vorhergehenden Ansprüche, wobei mindestens ein V-förmiger Ring (2, 4, 6) sich in der Materialstärke und/oder dem Material von mindestens einem der anderen V-förmigen Ringe (2, 4, 6) unterscheidet.

## Claims

1. Sealing ring, in particular for components of an internal combustion engine, with a first and a second axial sealing zone, comprising
- an inner closed ring (2) with V-shaped cross-section; and
- an outer closed ring (4) with V-shaped cross-section, the open side of which points in the same direction as that of the inner ring (2),
**characterized in that**
- the outer ring (4) consists of a non-thermosetting material and the inner ring (2) consists of a thermosetting material; and that
- at least the inner ring (2) or the outer ring (4) has in at least one of the sealing zones a profiling (10); and that the inner ring (2) or the outer ring (4) has in at least one of the sealing zones a coating (8).

2. Sealing ring according to claim 1, furthermore comprising
- one or more closed intermediate rings (6) with V-shaped cross-section, arranged between the inner ring (2) and the outer ring (4), wherein the open side points to the same direction as that of the inner (2) and outer ring (4).

3. Sealing ring according to claim 1 or 2, wherein the outer ring (4) consists of a softer material than that of the inner ring (2).

4. Sealing ring according to one of the preceding claims, wherein at least one V-shaped ring (2, 4, 6) differs in material thickness and/or in material from at least one of the other V-shaped rings (2, 4, 6).

## Revendications

1. Joint d'étanchéité, notamment pour les composants d'un moteur à combustion interne, comportant une première et une deuxième zone d'étanchéité axiale, comprenant :
- une bague fermée intérieure (2) avec une section transversale en forme de V ; et
- une bague fermée extérieure (4) avec une section transversale en forme de V, dont le côté ouvert est dirigé dans la même direction que celui de la bague intérieure (2) ; **caractérisé en ce que**
- la bague extérieure (4) est constituée d'un matériau ne durcissant pas à la chaleur et la bague intérieure (2) est constituée d'un matériau durcissant à la chaleur ; et **en ce que**
- au moins la bague intérieure (2) ou la bague extérieure (4) présente un profilage (10) dans au moins une des zones d'étanchéité, et **en ce que** la bague intérieure (2) ou la bague extérieure (4) présente un revêtement (8) dans au moins une des zones d'étanchéité axiale.

2. Joint d'étanchéité selon la revendication 1, comprenant en outre :
- une ou plusieurs bagues intermédiaires (6) fermées avec une section transversale en forme de V, disposées entre la bague intérieure (2) et la bague extérieure (4), dans lequel le côté ouvert est dirigé dans la même direction que celui de la bague intérieure (2) et de la bague extérieure (4).

3. Joint d'étanchéité selon les revendications 1 ou 2, dans lequel la bague extérieure (4) est constituée d'un matériau plus tendre que celui de la bague intérieure (2).

4. Joint d'étanchéité selon une des revendications précédentes, dans lequel au moins une bague en forme de V (2, 4, 6) se distingue par l'épaisseur du matériau et/ou le matériau d'au moins une des autres bagues (2, 4, 6) en forme de V.
